# EUROPÄISCHE PATENTANMELDUNG

(11) **EP 1 314 592 A2**
(43) Veröffentlichungstag der Anmeldung: **28.05.2003**
(21) Anmeldenummer: 02024325.9
(22) Anmeldetag: 02.11.2002
(51) Int. Cl.: B60H 1/24

(54) **Heiz- und/oder Klimaanlage mit dezentraler Luftfördervorrichtung**

(30) Priorität: 23.11.2001 DE 10157498
(71) Anmelder: DaimlerChrysler AG, 70567 Stuttgart (DE)
(72) Erfinder: Currle, Joachim, Dr., 70327 Stuttgart (DE); Frühauf, Frank, Dr., 73773 Aichwald (DE); Maué, Jürgen, 73235 Weilheim/Teck (DE); Wertenbach, Jürgen, 70734 Fellbach (DE)

(57) **Zusammenfassung**

Die Erfindung betrifft eine Heiz- und/oder Klimaanlage (1) für einen Innenraum eines Fahrzeugs mit einer zentralen Heizund/oder Kühlvorrichtung (2) und einer dezentralen Luftfördervorrichtung (5), die mehrere lokal im Fahrzeuginnenraum (8) angeordnete Luftförderaggregate (51) umfasst.

Um eine gute Regelung der Heiz- und/oder Klimaanlage (1) und eine effiziente Klimatisierung zu ermöglichen, ist in mehreren Teilräumen des Fahrzeuginnenraumes (8) jeweils ein Luftförderaggregat (51) der dezentralen Luftfördervorrichtung (5) zum Umwälzen von Umluft in dem jeweiligen Teilraum angeordnet.

## Beschreibung

Die Erfindung betrifft eine Heiz- und/oder Klimaanlage nach dem Oberbegriff des Anspruchs 1.

Aus der DE 198 14 581 A1 ist eine Klimaanlage mit einem zentralen, im Motorraum angeordneten Kältemodul bekannt. Zusätzlich zu dem zentralen Kältemodul sind im Fahrzeuginnenraum mehrere dezentrale Wärmeübertragungseinheiten verteilt angeordnet. Luft wird den Wärmeübertragungseinheiten über Luftkanäle zugeführt, wobei jeweils ein zentrales Gebläse ein oder mehrere Wärmeübertragungseinheiten versorgt. Das Gebläse ist entweder im Bereich der A-Säule oder im Bereich der C-Säule zentral angeordnet. Die Wärmeübertragungseinheiten sind an einen gemeinsamen Wärmekreislauf angeschlossen. Nachteilig ist hier, dass zur Verbindung der dezentralen Einheiten eine konstruktiv aufwendige und auch energetisch ungünstige, weil verlustbehaftete Leitungsführung erforderlich ist.

Die DE 196 25 927 A1 zeigt eine Einrichtung zum Heizen oder Kühlen eines Fahrzeugs, insbesondere eines Omnibusses. Die Einrichtung weist einen zentralen Wärmetauscher und zusätzlich mehrere im Innenraum des Omnibusses verteilt angeordnete Wärmetauscher auf, die den Innenraum jeweils Abschnittsweise aufheizen oder Kühlen. Die Wärmetauscher sind über einen gemeinsamen Wärmekreislauf miteinander verbunden und werden von einem Zentralen Gebläse über Luftkanäle mit Luft beaufschlagt.

Nachteilig ist hier die ebenfalls konstruktiv sehr aufwendige Leitungsführung, sowie die relativ unscharfe, weil einen recht großen Abschnitt des Innenraumes betreffende Einstellmöglichkeit der Temperatur.

Aufgabe der Erfindung ist es, eine Heiz- und/oder Klimaanlage für einen Fahrzeuginnenraum zu schaffen, die konstruktiv einfach aufgebaut ist und vorzugsweise gut regelbar ist. Insbesondere soll die Heiz- und/oder Klimaanlage einen geringen Energieverbrauch aufweisen und eine effiziente Klimatisierung ermöglichen.

Diese Aufgabe wird erfindungsgemäß durch eine Heiz- und/oder Klimaanlage nach den Merkmalen des Anspruchs 1 gelöst.

Der Innenraum eines Fahrzeugs, z. B. PKW oder Omnibus ist in der Regel sehr zerklüftet aufgebaut und weist mehrere Einbauten wie z. B. Sitze oder Trennwände auf, die den Innenraum in mehrere Teilräume unterteilen. Solche Teilräume können z.B. Fahrerfußraum und/oder Beifahrerfußraum und/oder Fondfußraum rechts bzw. links oder in Omnibussen der Raum hinter einer Sitzlehne sein. Die Erfindung sieht vor, in mehreren dieser Teilräume jeweils ein Luftförderaggregat einer dezentralen Luftfördervorrichtung zum Umwälzen von Umluft anzuordnen. Zusätzlich ist eine zentrale Luftförder- und/oder Luftkonditioniervorrichtung vorgesehen, die z. B. an einer zentralen Stelle im Motorraum oder im Cockpitbereich angeordnet sein kann und den Fahrzeuginnenraum mit konditionierter Zuluft, insbesondere Frischluft oder Außenluft beaufschlagt und/oder verbrauchte Abluft abführt. Die zentrale Luftkonditionierund/oder Luftfördervorrichtung kann ein Gebläse und/oder einen Wärmetauscher und/oder einen Verdampfer und/oder einen Filter zum Aufbereiten und/oder Fördern der Luft umfassen.

Die dezentrale Luftfördervorrichtung ist so ausgebildet, dass die Umwälzung der Umluft und/oder der Außenluft innerhalb eines oder mehrerer Teilbereiche des Fahrzeuginnenraumes erfolgt. Eine verlustbehaftete Führung der Umluft über lange Luftkanäle mit hohem Strömungswiderstand wird somit vermieden. Somit können Luftkanäle entfallen und die Heiz- und/oder Klimaanlage sehr kompakt ausgebildet werden.

Die dezentrale Luftfördervorrichtung wälzt die Umluft und/oder die Außenluft innerhalb der zugehörigen Teilbereiche des Innenraumes um, wobei die einzelnen Teilströmungen der Teilbereiche voneinander weitgehend getrennt sind. Eine unerwünschte Durchmischung von Luft kann somit weitgehend vermieden werden.

Insbesondere ist vorgesehen, dass die dezentralen Luftförderaggregate jeweils eine Lufteinlassöffnung und eine Luftauslassöffnung zum Einbringen bzw. Abführen von Umuft aufweisen. Mit Lufteinlassöffnung wird dabei die Öffnung bezeichnet, durch die Luft in den Innenraum des Fahrzeugs einströmt und mit Luftauslassöffnung wird die Öffnung bezeichnet, durch die Luft aus dem Innenraum abgeführt wird. Die Lufteinlassöffnung eines dezentralen Luftförderaggregates ist mit der Luftauslassöffnung desselben Luftförderaggregates über einen kurzen, örtlich abgegrenzten und abgeschlossenen Luftkanal verbunden, wobei das Luftförderaggregat in dem Luftkanal zwischen der Lufteinlassöffnung und der Luftauslassöffnung angeordnet ist. Um eine möglichst kurze und damit widerstandsarme Luftführung zu erhalten, können die Lufteinlassöffnung und die Luftauslassöffnung eines Luftförderaggregates in einem Teilraum räumlich benachbart, insbesondere nebeneinanderliegend angeordnet sein.

Eine Ausführung sieht vor, das Luftförderaggregat in einen Sitz, insbesondere in die Rückenlehne oder Sitzkissen eines Sitzes einzubauen, wobei die Lufteinlassöffnung und die Luftauslassöffnung zu dem hinter dem Sitz befindlichen Fußraum weisen, so dass dieser belüftet werden kann. Zusätzlich kann ein Teil der Luft zur Belüftung, vorzugsweise zum Heizen und/oder Kühlen der Rückenlehne und/oder Sitzfläche des Sitzes genutzt werden, indem ein Teil der Luft entlang der Oberfläche des Sitzkissens oder entlang der Oberfläche der Rückenlehne geführt wird.

Eine weitere Ausführung sieht vor, dass das Luftförderaggregat im Bereich der Armaturentafel im Fahrer- bzw. Beifahrerfußraum angeordnet ist, so dass die Lufteinlassöffnung und die Luftauslassöffnung jeweils zu dem Fahrerfußraum bzw. dem Beifahrerfußraum hin weisen, so dass der Fahrerfußraum bzw. der Beifahrerfußraum belüftet werden kann.

In einer vorteilhaften Ausführung ist vorgesehen, dass die Lufteinlassöffnung und die Luftauslassöffnung in den Teilräumen so nebeneinanderliegend angeordnet sind, dass das Luftförderaggregat eine geschlossene Umluftströmung in Form eines Zylinders oder einer Walze bildet. Insbesondere ist vorgesehen, dass die Lufteinlassöffnung und die Luftauslassöffnung jeweils eine rechteckige Grundfläche mit einer kurzen Quererstreckung und einer langen Längserstreckung aufweisen, wobei vorzugsweise die Länge der Längserstreckung die Breite der walzenförmigen Strömung bestimmt. Insbesondere kann vorgesehen sein, dass die Lufteinlassöffnung und die Luftauslassöffnung im wesentlichen gleiche Längserstreckung aufweisen, bzw. da sich die Luftströmung in ihrem Verlauf aufweitet, ist vorgesehen, dass die Luftauslassöffnung eine größere Quererstreckung als die Lufteinlassöffnung aufweist.

In einer Ausführung ist vorgesehen, dass die Heiz- und oder Klimaanlage mehrere umschaltbare Betriebsarten, wie z. B. Heizbetrieb und/oder Kühlbetrieb und/oder Außenluftbetrieb und/oder Umluftbetrieb und/oder Defrostbetrieb aufweist, wobei in zumindest einer Betriebsart die zentrale Luftförderund/oder Luftkonditioniervorrichtung Außenluft fördert und entsprechend des gewünschten Innenraumklimas voreinstellbar konditioniert als Zuluft bzw. Außenluft in den Fahrzeuginnenraum einbringt. Das bedeutet z.B., dass im Winter kalte Außenluft stark aufgeheizt werden muss oder im Sommer heiße Außenluft stark gekühlt werden muss, wofür jeweils ein entsprechend hoher Energieaufwand vonnöten ist.

Um nun mit geringem Energieaufwand ein angenehmes Innenraumklima im Fahrzeug zu schaffen, wird daher vorteilhafterweise schon vorkonditionierte Innenraumluft mit zum klimatisieren verwendet, was als Umluftbetrieb bezeichnet wird. Diese Umluft hat jedoch den Nachteil, dass sie, insbesondere bei voll besetzten Fahrzeugen, in der Regel recht schnell ziemlich feucht wird. Daher kann diese Innenraumluft nur im Bereich des Fußraumes verwendet werden, da ansonsten eine Beeinträchtigung des Komforts der Insassen eintritt oder bei entsprechender Außentemperatur die Scheiben von innen beschlagen könnten.

Die zentrale Luftförder- und/oder Luftkonditioniervorrichtung fördert die Außenluft im oberen Bereich des Innenraums zu oder ab. Die dezentrale Luftfördervorrichtung wälzt die Umluft im unteren Bereich des Innenraums um, so dass sich eine Schichtung der Luft ausbildet wobei die konditionierte, insbesondere trockene Außenluft im oberen Bereich des Innenraumes und die Umluft im unteren Bereich des Innenraumes angeordnet ist. Eine unerwünschte, weil Scheibenbeschlag verursachende Durchmischung von Zuluft und Umluft wird somit im Fahrzeuginnenraum weitgehend vermieden.

Um die Umluft zu konditionieren, kann ein Luftförderaggregat oder mehrere Luftförderaggregate der dezentralen Luftfördervorrichtung eine Heiz- und/oder Kühlvorrichtung, vorzugsweise mit Peltierelementen aufweisen. Es ist vorgesehen, dass die Heiz- und/oder Kühlvorrichtung individuell steuerbar ist, so dass die Temperatur und/oder Luftfeuchtigkeit und/oder Luftgeschwindigkeit in einem oder mehreren Teilräumen individuell einstellbar ist.

In einer vorteilhaften Ausführung kann ein Luftförderaggregat oder mehrere Luftförderaggregate der dezentralen Luftfördervorrichtung als sogenannter Disk-Fan oder Scheibenlüfter ausgebildet sein. Der Disk-Fan oder Scheibenlüfter weist ein rotierendes Paket aus mehreren parallelen Scheiben geringer Dicke auf, wobei zwei Scheiben jeweils einen zwischenliegenden Luftspalt begrenzen. Der Disk-Fan kann insbesondere so ausgebildet sein, dass Ansaug- und Abblasrichtung in einer Ebene liegen. Durch diesen Aufbau fördert der Disk-Fan insbesondere die Ausbildung stabiler und in sich geschlossener Strömungswalzen.
Ebenfalls von Vorteil ist, dass der Disk-Fan oder Scheibenlüfter bauartbedingt nur einen sehr geringen Geräuschpegel aufweist, so dass aufwendige und mit Strömungsverlusten behaftete Schalldämpfungsmaßnahmen reduziert werden bzw. ganz entfallen können. Für die Anordnung des Disk-Fans im Innenraum stellt die Geräuscharmut einen Komfortvorteil dar.

In einer Ausführung kann der Disk-Fan als Heiz- und/oder Kühlvorrichtung ausgebildet sein. Einzelne Scheiben des Disk-Fan können elektrisch leitend ausgebildet sein oder eine elektrisch leitende Beschichtung aufweisen, so dass die Scheiben elektrisch beheizbar sind. Ebenso ist vorgesehen, dass einzelne Scheiben des Disk-Fans ein oder mehrere Peltierelemente aufweisen oder als solche ausgebildet sind, und somit elektrisch heizbar und/oder kühlbar sind.

Weitere Merkmale und Ausführungsformen der Erfindung ergeben sich aus den Ansprüchen, den Figuren und der Figurenbeschreibung. Die vorstehend genannten und nachfolgend aufgeführten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

In den Figuren sind weitere Ausführungen der Erfindung dargestellt und erläutert, dabei zeigen:
- **Figur 1:**: Die Heiz- und/oder Klimaanlage mit dezentraler Luftfördervorrichtung in einem Fahrzeug in Seitenansicht;
- **Figur 2a-c:**: Eine schematische Darstellung von Luftförderaggregaten der dezentralen Luftfördervorrichtung;
- **Figur 3:**: Den schematischen Aufbau eines Scheibenlüfters mit Darstellung von Förderrichtungen;
- **Figur 4:**: Einen vergrößerten Ausschnitt von dem Ansaugbereich des Scheibenlüfters.

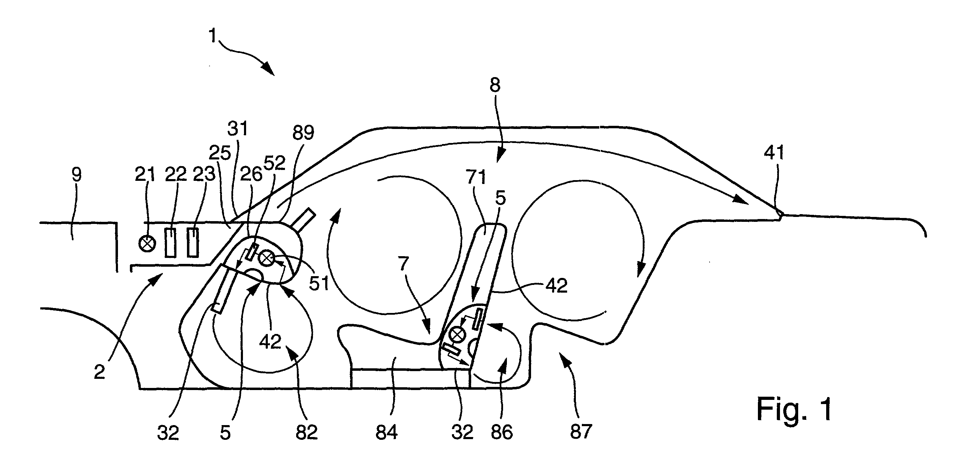

Die **Figur 1** zeigt eine Anordnung der Heiz- und/oder Klimaanlage 1 in einem Personenkraftwagen in schematischer Seitenansicht. Die Heiz- und/oder Klimaanlage 1 umfasst eine zentrale Luftkonditionier- und/oder Luftfördervorrichtung 2. Zentral bedeutet im folgenden an zentraler Stelle angeordnet, wie in Figur 1 im Motorraum 9 angeordnet. Des weiteren weist die Heiz- und/oder Klimaanlage 1 mehrere im Fahrzeuginnenraum 8 verteilt angeordnete lokale Luftförderaggregate 51 einer dezentralen Luftfördervorrichtung 5 auf. Dezentral bedeutet hier an mehreren Orten im Fahrzeuginnenraum 8 verteilt angeordnet.

Im vorderen Bereich des Fahrzeuginnenraumes 8 ist eine Armaturentafel 89 nach unten an eine Windschutzscheibe anschließend angeordnet. Unter der Armaturentafel befindet sich der Fahrer- bzw. Beifahrerfußraum 82. Der Fahrzeuginnenraum 8 weist einen weitgehend ebenen Innenraumboden auf, der in Fahrzeuglängsrichtung durch einen Mitteltunnel geteilt ist. Der Mitteltunnel teilt den Fahrerfußraum 82 in Fahrzeuglängsrichtung von dem Beifahrerfußraum ab, so dass der Fahrerfußraum 82 und der Beifahrerfußraum jeweils einen Teilraum bilden.

Auf dem Innenraumboden ist ein Fahrersitz 7 sowie ein Beifahrersitz in Fahrzeuglängsrichtung verschiebbar befestigt. Die Rückseite des Fahrzeuginnenraumes 8 ist durch eine Fondsitzbank 87 abgeschlossen. An dem oberen Ende der Fondsitzbank 87 ist eine Hutablage angebracht, die den verbleibenden Raum zur Heckscheibe abdeckt und als Stauraum nutzbar ist.

Der Fahrzeuginnenraum 8 ist relativ zerklüftet und weist mehrere, durch nachfolgend aufgezeigte Begrenzungen abgegrenzte Teilräume wie z.B. Fahrerfußraum 82, Beifahrerfußraum, Fondfußraum 86 auf. Die Vordersitze 7, also der Fahrersitz und der Beifahrersitz teilen den Fahrzeuginnenraum in einen vorderen Abschnitt vor dem Fahrer- 7 bzw. Beifahrersitz und einen hinteren Teil zwischen Fondsitzbank 87 und Fahrer- 7 bzw. Beifahrersitz auf. Zusätzlich ist der Fahrzeuginnenraum 8 im unteren Bereich durch den Mitteltunnel in Längsrichtung geteilt. In dem oberen Bereich des Fahrzeuginnenraumes ist im Kopf- bzw. Brustbereich der Passagiere ein freier Innenraumabschnitt, der zwischen oberem Ende der Sitze 7 bzw. deren Kopfstützen und Dachhimmel angeordnet ist und sich von der vorne angeordneten Armaturentafel 89 bis nach hinten zu dem oberen Ende der Fondsitzbank 87 erstreckt.

In den einzelnen Teilräumen des Fahrzeuginnenraumes 8 sind jeweils Luftförderaggregate 51 der dezentralen Luftfördervorrichtung 5 angeordnet.

Die zentrale Luftförder- und/oder Luftkonditioniervorrichtung 2 weist ein zentrales Luftförderaggregat 21, einen Wärmetauscher 22 und ein Verdampfer 23. Das zentrale Luftförderaggregat 21 fördert Außenluft durch den Verdampfer 23 und den Wärmetauscher 22 und durch Luftkanäle 25 hindurch in den Fahrzeuginnenraum 8. Die Außenluft strömt dabei von außen in das Klimagehäuse 2 hinein und wird über einen Wasserkasten, der eventuell mit der Luft mitgeführtes Wasser abscheidet, geführt. In dem Klimagehäuse 2 sind zudem stellbare Klappen und Umgehungskanäle angeordnet, um die Außenluft je nach gewünschter Betriebsart und/oder Temperatur und/oder Feuchtigkeit durch den Wärmetauscher 22 und/oder den Verdampfer 23 hindurch, oder nur zum Teil durch diese hindurch oder um diese herum zu leiten. So kann die Außenluft entsprechend des gewünschten Innenraumklimas wunschgemäß konditioniert werden.

Über eine im Bereich der Armaturentafel 89 an der Windschutzscheibe angeordnete Einlassöffnung 31 tritt die von der zentralen Luftförder- und/oder Luftkonditioniervorrichtung konditionierte Luft in den Fahrzeuginnenraum 8 ein. Diese Einlassöffnung 31 erstreckt sich am unteren Ende der Windschutzscheibe über einen Großteil der Breite der Armaturentafel 89 bzw. des Fahrzeugs. Der Einlassöffnung 31 ist eine im Bereich der Heckscheibe angeordnete Auslassöffnung 41 zugeordnet. Diese ist im Bereich der Hutablage im unteren Bereich der Heckscheibe angeordnet und erstreckt sich ebenfalls über einen Großteil der Fahrzeugbreite. Diese Anordnung der Einlass- bzw. Auslassöffnung 31, 41 bewirkt, dass die von der zentralen Luftförder- und/oder Luftkonditioniervorrichtung 2 konditionierte Luft, wie in Figur 1 mit einem Pfeil dargestellt, entlang der vorhandenen Begrenzungsflächen des Innenraumes wie Windschutzscheibe, Dachhimmel und Heckscheibe hin zu der Auslassöffnung 41 geführt wird. Somit werden die Scheiben und der Kopfbereich der Passagiere von dieser konditionierten Luft umströmt. Bei Umluftbetriebsart wird so ermöglicht, dass im oberen Bereich des Fahrzeuginnenraumes 8 und/oder im Bereich der Scheiben über die zentrale Luftförder- und/oder Luftkonditioniervorrichtung 2 ein Anteil von Außenluft geführt wird.

Im Fahrzeuginnenraum 8 sind in den abgegrenzten Teilräumen, wie z.B. Fahrerfußraum 82 und/oder Beifahrerfußraum und/oder Fondfußraum 86 lokale Luftförderaggregate 51 der dezentralen Luftfördervorrichtung 5 angeordnet, so dass eine gezielte Belüftung dieser lokal abgegrenzten Teilräume ermöglicht wird.

Im Bereich des Fahrerfußraumes ist ebenso wie im Bereich des Beifahrerfußraumes je ein Luftförderaggregat 51 im Bereich der Unterseite der Armaturentafel 89 angeordnet.

Der Fahrersitz 7 weist wie auch der Beifahrersitz je ein Luftförderaggregat 51 auf. Das Luftförderaggregat 51 ist innerhalb der Rückenlehne 71 aufgenommen, wobei die Einlassöffnung und die Auslassöffnung zu dem hinter dem Sitz angeordneten Fondfußraum hin gerichtet sind, so dass dieser belüftet wird.

Die Sitze 7 mit den integrierten Luftförderaggregaten 51 sind auch vorteilhafterweise bei Omnibussen oder Personenzügen einsetzbar, insbesondere zum individuell einstellbaren Klimatisieren einzelner, lokal abgegrenzter Bereiche wie z.B. eines Sitzplatzes.

Die dezentrale Luftfördervorrichtung 5 wälzt Umluft im unteren Bereich des Fahrzeuginnenraumes 8 um. Die Umluft wird von der Einlassöffnung 3 aus entlang einer oder mehrerer Begrenzungsflächen geleitet und strömt dann zu der Auslassöffnung 4 hin. Dort wird die Umluft von dem Luftförderaggregat 51 wieder angesaugt und durch die Einlassöffnung 3 wieder in den entsprechenden Teilbereich des Fahrzeuginnenraumes eingeblasen. Die lokalen Luftförderaggregate 51 bilden also jeweils einen Umluft-Kreislauf mit walzen- oder zylinderförmigem Strömungsverlauf aus, wie in Figur 1 durch Pfeile angedeutet ist.

Die lokalen Einheiten 5 bilden stabile walzenförmige Strömungsverläufe im Fahrzeuginnenraum aus. Dadurch wird sichergestellt, dass zum größten Teil die Luft, die aus einer Einlassöffnung 3 in den Fahrzeuginnenraum 8 eingebracht wird zum größten Teil durch die zugehörige Auslassöffnung 4 wieder aus dem Fahrzeuginnenraum 8 abgeführt wird.

Die Einlassöffnung 3 und die Auslassöffnung 4 der lokalen Luftförderaggregate 51 weisen jeweils rechteckige Grundfläche mit schmaler Quer- und langer Längserstreckung auf. Die Längserstreckung verläuft quer zu der Fahrzeuglängsrichtung und ist an die Breite der Strömungswalze angepasst.

Wie in Figur 1 dargestellt, bilden sich walzenförmige Umluftströmungen im Bereich der Fußräume 82, 86 aus. Die konditionierte Außenluft wird im Kopfraum geführt. Diese, durch eine aktive Belüftung verursachten Strömungen bewirken weitere korrespondierende Luftströmungen, die ebenfalls Walzenform aufweisen und vor der Sitzfläche bzw. Lehnenfläche des Fahrersitzes 7 oder Beifahrersitzes angeordnet sind. Es bilden sich an den Berührungsflächen der einzelnen Strömungen Kontaktflächen aus im Dachbereich oder Fußraumbereich aus. An diesen Kontaktstellen ist jeweils eine geringe Durchmischung der verschiedenen Luftströmungen möglich.

In dem Fahrzeuginnenraum 8 wird durch die Anordnung der lokalen Luftförderaggregate 51 der dezentralen Luftfördervorrichtung 5 eine geschichtete Luftströmung gebildet. Im oberen Bereich des Fahrzeuginnenraumes 8 wird konditionierte Außenluft, bzw Frischluft geführt. In dem mittleren Bereich des Fahrzeuginnenraumes 8 wird infolge der geringfügigen Durchmischung der sich berührenden verschiedenen Luftströmungen Umluft mit einem Teil Außenluft geführt. Im unteren Bereich des Fahrzeuginnenraumes 8 wird überwiegend Umluft geführt.

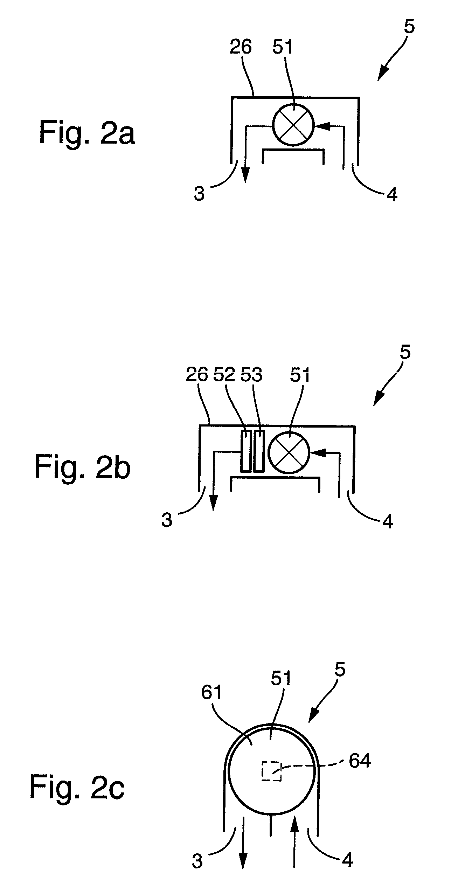

Der schematische Aufbau der Luftförderaggregate 51 der dezentralen Luftfördervorrichtung 5 ist in den **Figuren 2a** bis **c** dargestellt. Die Luftförderaggregate 51 bilden jeweils abgeschlossene Einheiten, die einen in sich abgeschlossenen Luftkanal 26 mit einer Einlassöffnung 3 und einer Auslassöffnung 4 aufweisen. Innerhalb des Luftkanals 26 ist das Luftförderaggregat 51 angeordnet, wie in Figur 2a dargestellt. Das Luftförderaggregat 51 kann als elektrisch angetriebenes Axialgebläse oder Radialgebläse ausgebildet sein.

Figur 2b zeigt eine Einheit, die zusätzlich noch ein in dem Luftkanal angeordnetes Heizelement 52 zum Beheizen der Luft und ein Kühlelement 53 zum Kühlen der Luft aufweist. Das Heizelement 52 ist wie auch das Kühlelement 53 stromabwärts des Luftförderaggregates 51 innerhalb des Luftkanals 26 angeordnet. In einer zu der dargestellten Ausführung abgewandelten Form kann das Heizelement 52 und/oder das Kühlelement 53 auch stromaufwärts angeordnet sein. Das Heizelement 52 kann elektrisch beheizbare Widerstände, insbesondere PTC-Widerstände aufweisen. Das Kühlelement 53 kann elektrisch betriebene Peltierelemente zum Heizen und/oder Kühlen der Luft aufweisen.

Es ist vorgesehen, dass das lokale Luftförderaggregat 51 und/oder das lokale Heizelement 52 und/oder das lokale Kühlelement 53 individuell einstellbar ist. Aufgrund des vorwählbaren Kühlvorganges kann die Luft auch individuell entfeuchtet werden. So kann ein Passagier die Temperatur und/oder die Stärke der Umwälzung der Umluft in einem Teilraum individuell einstellen. Ferner ist vorgesehen das Luftförderaggregat 51 und/oder das lokale Heizelement 52 und/oder das lokale Kühlelement 53 über eine Steuerungsvorrichtung gemeinsam mit dem zentralen Luftförderaggregat 21 und/oder dem zentralen Wärmetauscher 22 und/oder dem zentralen Verdampfer 23 und oder weiteren lokalen Einheiten zu steuern, um über ein voreingestelltes Klimaprogramm z B. ein schnelles Aufheizen oder Abkühlen des Fahrzeuginnenraumes 8 zu ermöglichen.

Die Figur 2c zeigt eine besonders kompakte Ausführung, bei der das Luftförderaggregat 51 als Disk-Fan oder Scheibenlüfter ausgebildet ist. Der Luftkanal 26 bildet hierbei das Gehäuse des Scheibenlüfters. Die Einlassöffnung 3 bzw. Auslassöffnung 4 sind in einer Ebene nebeneinanderliegend angeordnet, so dass eine Umlenkung der Luft, wie in den Bespielen von Figur 2a und Figur 2b notwendig, entfällt. Durch die Ausbildung des Luftförderaggregats 51 als Scheibenlüfter können die lokalen Einheiten somit konstruktiv einfach und kompakt ausgebildet werden.

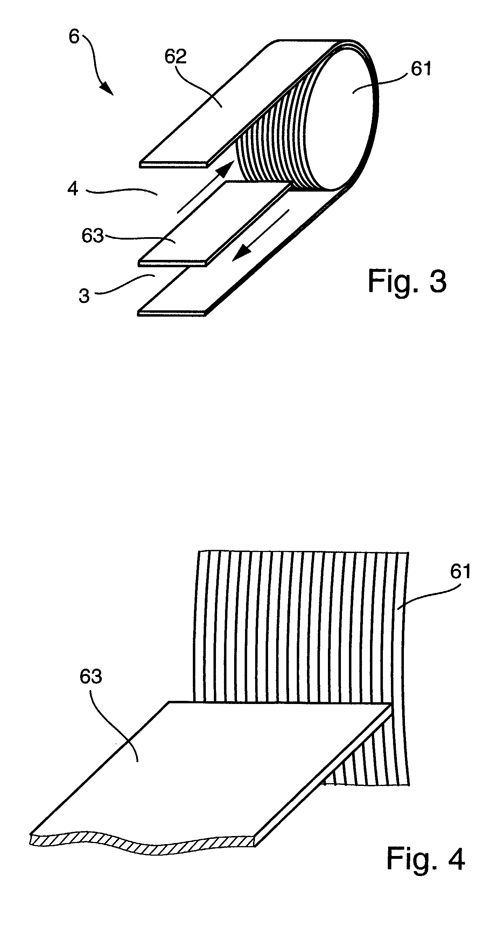

Der Aufbau des Scheibenlüfters oder Disk-Fans ist in **Figur 3** gezeigt. Er weist ein Scheibenlüftergehäuse 62 auf, in dem ein Rotor drehbar gelagert ist. Dieser weist ein Paket aus mehreren dünnen Scheiben 61 auf, die parallel und mit Abstand zueinander drehfest auf einer gemeinsamen Welle angeordnet sind. Zwischen zwei Scheiben 61 ist jeweils ein Luftspalt ausgebildet. Je nach gewünschter Fördermenge kann der Rotor des Disk-Fans 6 etwa 10 bis 100 Scheiben aufweisen. Es hat sich gezeigt, dass eine Scheibendicke von 0,2mm bis 1mm und ein Scheibenabstand von 2mm bis 8mm, bei einem Scheibendurchmesser von 5cm bis 30 cm ideal sind. Der Rotor wird von einem Motor 64 in Rotation versetzt, indem der Motor 64 die Welle antreibt. Das Scheibenlüftergehäuse 62 weist eine Einlassöffnung 3 und eine Auslassöffnung 4 auf. Die Einlassöffnung 3 und die Auslassöffnung 4 liegen in einer Ebene, wobei die angesaugte Luft und die geförderte Luft entgegengesetzte Strömungsrichtungen aufweisen (**Figur 4**). Die Luftförderöffnungen 3, 4 sind an einer Seite des Gehäuses 62 nebeneinanderliegend angeordnet und durch eine Trennwand 63 abgetrennt.

Der Disk-Fan 6 ist so ausgebildet, dass er die geförderte Luft umlenkt. Da die Lufteintrittsrichtung und die zugehörige Luftaustrittsrichtung in einer gemeinsamen Ebene liegen, können bei Verwendung des Disk-Fans 6 aufwendige Maßnahmen zur Luftumlenkung, die einen hohen Strömungsverlust aufweisen, verringert werden oder ganz entfallen. Durch seinen konstruktiven Aufbau unterstützt der Disk-Fan 6 die Ausbildung stabiler, walzenförmiger Strömungsgebilde, so dass die Verwendung eines Disk-Fan 6 oder Scheibenlüfter 6 die gewollte stabile Umluftführung entlang geschlossener Strömungen unterstützt.

Die Scheiben 61 des Scheibenlüfters 6 können elektrisch beheizbar ausgebildet sein, indem sie z. B. eine elektrisch leitende Beschichtung aufweisen oder aus einem elektrisch leitenden Werkstoff ausgebildet sind.

Ferner können die Scheiben 61 des Scheibenlüfters 6 ein oder mehrere Peltierelemente zum heizen und/oder kühlen der Umluft aufweisen, so dass der Rotor des Scheibenlüfters 6 als Heizelement 52 und/oder Kühlelement 53 zum Heizen und/oder Kühlen der Umluft ausgebildet ist.

## Patentansprüche

1. Heiz- und/oder Klimaanlage für einen mehrere Teilräume, insbesondere Fahrerfußraum und/oder Beifahrerfußraum und/oder Fondfußraum, aufweisenden Innenraum eines Fahrzeugs, vorzugsweise Straßenfahrzeug oder Schienenfahrzeug,
mit einer zentralen Luftförder- und/oder Luftkonditioniervorrichtung, die zum heizen und/oder kühlen und/oder trocknen und/oder reinigen und/oder befeuchten und/oder fördern von Luft ausgebildet ist und zumindest ein Gebläse, einen Wärmetauscher und vorzugsweise einen Verdampfer umfasst und zwischen mehreren Betriebsarten umschaltbar ist,
sowie mit einer dezentralen Luftfördervorrichtung, die mehrere im Fahrzeuginnenraum angeordnete Luftförderaggregate aufweist,
**dadurch gekennzeichnet,**
**dass** in mehreren Teilräumen (82, 86) des Fahrzeuginnenraumes (8) jeweils ein Luftförderaggregat (51) der dezentralen Luftfördervorrichtung (5) angeordnet ist und in zumindest einer Betriebsart die zentrale Luftförderund/oder Konditioniervorrichtung (2) Zuluft in den Fahrzeuginnenraum (8) einbringt und Abluft abführt und die Luftförderaggregate (51) der dezentralen Luftfördervorrichtung (5) Luft in dem jeweiligen Teilraum umwälzen.

2. Heiz- und/oder Klimaanlage nach Anspruch 1,
**dadurch gekennzeichnet,**
**dass** ein Luftförderaggregat (51) der dezentralen Luftfördervorrichtung (5) eine Lufteinlassöffnung (3) und eine Luftauslassöffnung (4) aufweist und die Lufteinlassöffnung (3) und die Luftauslassöffnung (4) und das Luftförderaggregat (51) in demselben Teilraum des Fahrzeuginnenraumes (8) angeordnet sind.

3. Heiz- und/oder Klimaanlage nach Anspruch 2,
**dadurch gekennzeichnet,**
**dass** das Luftförderaggregat (51) mit der Lufteinlassöffnung (3) und der Luftauslassöffnung (4) über einen abgeschlossenen Luftkanal (26) verbunden ist.

4. Heiz- und/oder Klimaanlage nach einem der Ansprüche 1 bis 3,
**dadurch gekennzeichnet,**
**dass** das Luftförderaggregat (51) im unteren Bereich eines Sitzes (7), vorzugsweise in der Rückenlehne (71) oder dem Sitzkissen, so eingebaut ist, dass die Lufteinlassöffnung (3) und die Luftauslassöffnung (4) zu dem hinter dem Sitz befindlichen Fußraum, vorzugsweise Fondfußraum (86) hin weist und insbesondere das Luftförderaggregat (51) die Luft über die Lufteinlassöffnung (3) und die Luftauslassöffnung (4) in diesem Fußraum umwälzt.

5. Heiz- und/oder Klimaanlage nach einem der Ansprüche 1 bis 3,
**dadurch gekennzeichnet,**
**dass** das Luftförderaggregat (51) im Bereich des Fahrerfußraumes (82) oder Beifahrerfußraumes so angeordnet ist, vorzugsweise im Bereich einer Armaturentafel (89), dass die Lufteinlassöffnung (3) und die Luftauslassöffnung (4) zu dem Fahrerfußraum (82) bzw. Beifahrerfußraum hin weisen und insbesondere das Luftförderaggregat (51) die Luft über die Lufteinlassöffnung (3) und die Luftauslassöffnung (4) in diesem Fußraum umwälzt.

6. Heiz- und/oder Klimaanlage nach einem der Ansprüche 1 bis 5,
**dadurch gekennzeichnet,**
**dass** das in einem Teilraum angeordnete Luftförderaggregat (51) bzw. die in mehreren Teilräumen angeordneten Luftförderaggregate (51) die Luft in den Teilräumen so umwälzen, dass in den Teilräumen jeweils eine geschlossene Luftströmung, vorzugsweise in Form einer Walze entsteht.

7. Heiz- und/oder Klimaanlage nach einem der Ansprüche 1 bis 6,
**dadurch gekennzeichnet,**
**dass** ein Luftförderaggregat (51) oder mehrere Luftförderaggregate (51) der dezentralen Luftfördervorrichtung (5) einzeln steuerbar und/oder regelbar ist bzw. sind.

8. Heiz- und/oder Klimaanlage nach einem der Ansprüche 1 bis 7,
**dadurch gekennzeichnet,**
**dass** die zentrale Luftförder- und/oder Konditioniervorrichtung (2) so ausgebildet ist, dass die Außenluft im oberen Bereich des Fahrzeuginnenraumes (8) zugeführt und wieder abgeführt wird, insbesondere dass an einer Fahrzeugseite, vorzugsweise Frontseite bzw. Heckseite im Bereich der Scheiben die Zuluft in den Fahrzeuginnenraum (8), eingebracht wird und an der gegenüberliegenden Seite im oberen Bereich, vorzugsweise Heckseite bzw. Frontseite im Bereich der Scheiben wieder aus dem Fahrzeuginnenraum (8) abgeführt wird.

9. Heiz- und/oder Klimaanlage nach einem der Ansprüche 1 bis 8,
**dadurch gekennzeichnet,**
**dass** die dezentrale Luftfördervorrichtung (5) so ausgebildet ist, dass sie die Umluft im unteren Bereich des Fahrzeuginnenraumes (8) umwälzt.

10. Heiz- und/oder Klimaanlage nach einem der Ansprüche 8 oder 9,
**dadurch gekennzeichnet,**
**dass** die zentrale Luftförder- und/oder Luftkonditioniervorrichtung (2) und die dezentrale Luftfördervorrichtung (5) so ausgebildet sind, dass die Luft in dem Fahrzeuginnenraum (5) eine Schichtung aufweist, indem die Zuluft im oberen Bereich und die Umluft im unteren Bereich des Fahrzeuginnenraumes (8) entlang in sich abgeschlossener Strömungsverläufe geführt wird, wobei vorzugsweise in dem Fahrzeuginnenraum möglichst wenig Vermischung zwischen Zuluft und Umluft auftritt.

11. Heiz- und/oder Klimaanlage nach einem der Ansprüche 1 bis 10,
**dadurch gekennzeichnet,**
**dass** ein Luftförderaggregat (51) oder mehrere Luftförderaggregate (51) der dezentralen Luftfördervorrichtung (5) eine, vorzugsweise individuell steuerbare Heiz- und/oder Kühlvorrichtung, vorzugsweise Heizelement (52) und/oder Kühlelement (53) und/oder Peltierelement aufweist bzw. aufweisen.

12. Heiz- und/oder Klimaanlage nach einem der Ansprüche 1 bis 11,
**dadurch gekennzeichnet,**
**dass** ein Luftförderaggregat (51) oder mehrere Luftförderaggregate (51) der dezentralen Luftfördervorrichtung (5) als Disk-Fan (6) oder Scheibenlüfter ausgebildet ist bzw. sind.

13. Heiz- und/oder Klimaanlage nach Anspruch 12,
**dadurch gekennzeichnet,**
**dass** der Disk-Fan (6) als Heiz- und/oder Kühlvorrichtung ausgebildet ist, indem einzelne Scheiben (61) des Disk-Fan vorzugsweise elektrisch beheizbar und/oder kühlbar sind.

14. Heiz- und/oder Klimaanlage nach Anspruch 12 oder 13,
**dadurch gekennzeichnet,**
**dass** der Disk-Fan (6) als Heiz- und/oder Kühlvorrichtung ausgebildet ist, indem er einen zwischen die Scheiben eingreifenden Ringwärmetauscher und/oder einen Ringverdampfer aufweist.
